# EUROPÄISCHE PATENTANMELDUNG

(11) **EP 2 639 429 A1**
(43) Veröffentlichungstag der Anmeldung: **18.09.2013**
(21) Anmeldenummer: 12005096.8
(22) Anmeldetag: 10.07.2012
(51) Int. Cl.: F02C 7/08, F02C 9/18

(54) **Flugtriebwerk**

(30) Priorität: 16.03.2012 EP 12001802
(71) Anmelder: MTU Aero Engines AG, 80995 München (DE)
(72) Erfinder: Robinson, Jerry C. J., 85405 Nandlstadt (DE)
(74) Vertreter: Schlotter, Alexander Carolus Paul

(57) **Zusammenfassung**

Die vorliegende Erfindung betrifft ein Flugtriebwerk, insbesondere Hubschraubertriebwerk, mit einer ein- oder mehrstufigen Verdichteranordnung (V), einer dieser nachgeschalteten Brennkammer (BK), einer dieser nachgeschalteten ein- oder mehrstufigen Turbinenanordnung (HT, NT), einer Verdichterwärmetauscheranordnung (WV), einer Turbinenwärmetauscheranordnung (WT) und einem Bypassmittel zum wahlweisen Durch- oder Vorbeiführen von Arbeitsmedium an wenigstens einem Turbinenwärmetauscher (WT) der Turbinenwärmetauscheranordnung.

## Beschreibung

Die vorliegende Erfindung betrifft ein Flugtriebwerk, insbesondere ein Hubschraubertriebwerk, sowie ein Verfahren zum Betreiben eines solchen Flugtriebwerks.

Bisherige Wärmetauschergasturbinen sind, insbesondere aufgrund der Größe der für Volllastbetrieb ausgelegten Wärmetauscher, als Flugtriebwerke, insbesondere als Hubschraubertriebwerke, nur bedingt geeignet.

Aufgabe der vorliegenden Erfindung ist es, ein Luftfahrzeug, insbesondere einen Hubschrauber, vorteilhaft zu betreiben.

Zur Lösung dieser Aufgabe wird ein Flugtriebwerk mit den Merkmalen des Anspruchs 1 sowie ein Verfahren mit den Merkmalen des Anspruchs 6 vorgeschlagen. Vorteilhafte Weiterbildungen sind Gegenstand der Unteransprüche.

Nach einem Aspekt der vorliegenden Erfindung wird vorgeschlagen, eine einer Turbine nachgeschaltete Turbinenwärmetauscheranordnung mit dem Arbeitsmedium des Triebwerks wahlweise jeweils ganz oder teilweise zu durchströmen oder zu umgehen, wobei unter Arbeitsmedium insbesondere das Fluid verstanden wird, dass die Brennkammer durchströmt.

Dadurch kann in einem Betriebszustand, insbesondere bei Volllast, die Turbinenwärmetauscheranordnung vollständig oder teilweise umgangen werden, so dass sie nicht auf die hohen Belastungen und Massenströme beispielsweise des Volllastbetriebs ausgelegt sein muss. Entsprechend kann die Turbinenwärmetauscheranordnung und somit das Flugtriebwerk vorteilhaft kompakter ausgebildet werden und eignet sich so insbesondere als Hubschraubertriebwerk. In einem anderen Betriebszustand, insbesondere bei Teillast, beispielsweise bei Druckverhältnissen, die kleiner als 10:1 1 sind, kann hingegen die - vorzugsweise kompakte und nur auf solche Teillast-Belastungen und -Massenströme ausgelegte - Turbinenwärmetauscheranordnung "zugeschaltet" und so der Betrieb des Flugtriebwerks verbessert werden. Man kann somit in einer Ausführung wahlweise, je nach Betriebszustand, zwei Flugtriebwerke zur Verfügung stellen: ein Turbinenwärmetauscheranordnungs-Flugtriebwerk für Teillast und ein turbinenwärmetauscheranordnungsfreies Flugtriebwerk für Volllast.

Nach einem Aspekt der vorliegenden Erfindung weist ein Flugtriebwerk eine ein - oder mehrstufige Verdichteranordnung, eine dieser nachgeschaltete Brennkammer und eine dieser nachgeschaltete ein- oder mehrstufige Turbinenanordnung auf.

Die Verdichteranordnung kann insbesondere eine oder mehrer Nieder-, Mittel - und/oder Hochdruckverdichter bzw. -verdichterstufen aufweisen, die Turbinenanordnung eine oder mehrer Hoch-, Mittel- und/oder Niederdruckturbinen bzw. - turbinenstufen.

Vor und/oder nach einer oder mehreren Verdichterstufen, insbesondere zwischen einer in Durchströmungsrichtung letzten Verdichterstufe und der Brennkammer, ist ein Wärmetauscher einer Verdichterwärmetauscheranordnung angeordnet. Vor und/oder nach einer oder mehreren Turbinenstufen, insbesondere nach einer in Durchströmungsrichtung letzten Turbinenstufe, ist ein Wärmetauscher einer Turbinenwärmetauscheranordnung zum Wärmetausch mit Arbeitsmedium des Flugtriebwerks angeordnet. Verdichter- und Turbinenwärmetauscheranordnung, die gemeinsamen einen Triebwerkswärmetauscher bilden, kommunizieren miteinander, insbesondere über ein strömendendes Wärmetauschermedium, insbesondere, um Wärme von dem heißeren Arbeitsmedium der Turbinenanordnung auf kälteres Arbeitsmedium der Verdichteranordnung zu übertragen.

In einer Ausführung der vorliegenden Erfindung ist ein, vorzugsweise der einzige, Wärmetauscher der Verdichterwärmetauscheranordnung als vom Arbeitsmedium des Flugtriebwerks durchströmte Wärmetauscherpassage ausgebildet, die dazu eingerichtet ist, von einem Teil oder - wenigstens im Wesentlichen - dem gesamten Arbeitsmedium, das eine, insbesondere in Durchströmungsrichtung letzte, Verdichterstufe der Verdichteranordnung verlässt, durchströmt zu werden, um in der Turbinenwärmetauscheranordnung Wärme vom Arbeitsmedium, das eine, insbesondere in Durchströmungsrichtung letzte, Turbinenstufe der Turbinenanordnung verlässt, aufzunehmen, und anschließend als erwärmtes Arbeitsmedium vorzugsweise der Brennkammer zugeführt zu werden. Entsprechend kann in einer Ausführung allgemein das Wärmetauschermedium das Arbeitsmedium sein, das die Verdichteranordnung durchströmt hat, die Verdichterwärmetauscheranordnung kann als offener Wärmetauscher ausgebildet sein. In einer Ausführung weist die Verdichterwärmetauscheranordnung einen Einlass auf, der dazu eingerichtet ist, von einem Teil oder - wenigstens im Wesentlichen - dem gesamten Arbeitsmedium, das eine, insbesondere in Durchströmungsrichtung letzte, Verdichterstufe der Verdichteranordnung verlässt, durchströmt zu werden, und einen Auslass, der dazu eingerichtet ist, dieses Arbeitsmedium nach Durchströmen der Wärmetauscherpassage der Brennkammer zuzuführen. Die Wärmetauscherpassage zwischen Ein- und Auslass kann insbesondere ein oder mehrere, vorzugsweise parallele, Rohre oder Rohrabschnitte aufweisen.

Nach einer Ausführung ist ein variables bzw. verstellbares Bypassmittel vor wenigstens einem Wärmetauscher der Turbinenwärmetauscheranordnung angeordnet, um einen Anteil an Arbeitsmedium wahlweise an einem oder mehreren, insbesondere allen Wärmetauscher der Turbinenwärmetauscheranordnung vorbei oder durch diese(n) Wärmetauscher hindurch zu führen.

Das Bypassmittel kann insbesondere ein oder mehrere Stellventile zum wahlweisen, insbesondere vollständigen oder begrenzten, Öffnen und/oder Schließen einer Bypasspassage und/oder einer Arbeitsmediumpassage durch den bzw. die Wärmetauscher der Turbinenwärmetauscheranordnung aufweisen.

Nach einem Aspekt der vorliegenden Erfindung ist der Triebwerkswärmetauscher, insbesondere die Verdichter- und/oder Turbinenwärmetauscheranordnung nicht auf einen Volllastbetriebszustand, sondern auf einen, insbesondere relevanten bzw. maßgeblichen oder Haupt-Teillastbetriebszustand ausgelegt, um vorteilhafterweise Größe, Gewicht und/oder Wirkungsgrad zu optimieren. Dies kann auch von dem gewählten thermodynamischen Kreisprozess abhängen.

In einer bevorzugten Ausführung werden in wenigstens einem Betriebszustand, insbesondere in einem Volllastbetriebszustand, wenigstens 30%, insbesondere wenigstens 50% des Arbeitsmediums, bezogen beispielsweise auf den Massen- oder Volumenstrom, durch die Bypasspassage bzw. an der Turbinenwärmetauscheranordnung vorbei geführt, insbesondere derart, dass die Turbine voll entspannen kann. In einer Weiterbildung werden in wenigstens einem anderen Betriebszustand, insbesondere in einem Teillastbetriebszustand, weniger als 50%, insbesondere weniger als 30% des Arbeitsmediums durch die Bypasspassage geführt.

In einer bevorzugten Ausführung sind ein oder mehrere Verdichterstufen und/oder Turbinenstufen, insbesondere wenigstens 30%, vorzugsweise wenigstens 50% aller Verdichterstufen der Verdichteranordnung und/oder wenigstens 30%, vorzugsweise wenigstens 50% aller Turbinenstufen der Turbinenanordnung, insbesondere eines Kerntriebwerksverdichters ("core engine compressors") variabel bzw. verstellbar ausgebildet, insbesondere, um, vorzugsweise große, Variationen der Verdichterkapazität ohne, insbesondere hohen, Wirkungsgradverlust zu ermöglichen.

In einer bevorzugten Ausführung weist das Flugtriebwerk, insbesondere die Verdichter- und/oder Turbinenanordnung, variabel bzw. verstellbar ausgebildete Leit - und/oder Laufschaufeln auf. Vorzugsweise sind diese dazu ausgebildet, eine Variation der Kapazität um einen Nennwert zu erlauben, die wenigstens -30%, insbesondere wenigstens -35%, und/oder höchstens +15%, insbesondere höchstens +10% beträgt, insbesondere bei Lastwechseln und/oder instationären Vorgängen.

In einer bevorzugten Ausführung weist das Flugtriebwerk eine Hochdruckturbine bzw. -turbinenstufe mit variabler Kapazität auf, um die thermodynamischen Drossellinien in der Charakteristik der Verdichteranordnung, insbesondere eines Kemtriebwerksverdichters, zu verändern.

In einer bevorzugten Ausführung weist der thermodynamische Kreisprozess des Flugtriebwerks ein, insbesondere mittleres, Druckverhältnis auf, das wenigstens 5:1, insbesondere wenigstens 10:1 und/oder höchstens 50:1, insbesondere höchstens 20:1 beträgt, insbesondere abhängig von einer vorgegebenen bzw. geforderten Energie- bzw. Leistungsdichte, beispielsweise Wellenleistung/Triebwerksgewicht, etwa shp/lb, für die Anwendung und den erforderlichen thermodynamischen Basiskreisprozesswirkungsgrad ("basic cycle thermodynamic efficiency").

Nach einem Aspekt der vorliegenden Erfindung wird im Betrieb bei stationären Bedingungen und/oder innerhalb des Betriebsbereichs, das Triebwerk innerhalb der Betriebsgrenzen, bei der maximalen Brenner- bzw. Brennkammeraustrittstemperatur und/oder dem minimalen Massenstrom für eine vorgegebene Leistungsabgabe betrieben, während vorzugsweise maximale Wirkungsgradniveaus in einer oder mehreren Komponenten des Triebswerks entsprechend der besten Komponentenabstimmung für den Kreisprozess beibehalten werden.

Zusätzlich oder alternativ kann bei hohen Leistungen, insbesondere Volllast, das Bypassmittel so betrieben werden, dass die Wärmetauscherfluss-, -verlust und - wirkungsgradkorrelation und der thermodynamische Kerntriebwerkskreisprozesswirkungsgrad ("core engine cycle thermodynamic efficiency") optimiert werden bzw. sind.

Zusätzlich oder alternativ können bei transienten Betriebszuständen eine oder mehrere variable Komponenten verändert bzw. verstellt werden, um Stabilitätsanforderungen, maximale Hochlaufgeschwindigkeiten und/oder Temperaturgrenzen einzuhalten.

Hierzu kann das Flugtriebwerk in einer Ausführung eine entsprechend eingerichtete Steuerung aufweisen.

Nach einem Aspekt der vorliegenden Erfindung wird in wenigstens einem Betriebszustand, insbesondere in einem Volllastbetriebszustand, wenigstens 30%, insbesondere wenigstens 50% des aus der Brennkammer austretenden Arbeitsmediums ganz oder teilweise an der Turbinenwärmetauscheranordnung vorbei geführt. In einer Weiterbildung werden wenigstens 30%, insbesondere wenigstens 50% des Arbeitsmediums wenigstens teilweise an der Turbinenwärmetauscheranordnung vorbei geführt, falls das Druckverhältnis zwischen Verdichteranordnungseintritts- und Turbinenanordnungsaustrittsdruck größer als 10:1, insbesondere größer als 12:1 ist. Zusätzlich oder alternativ können wenigstens 30%, insbesondere wenigstens 50% des Arbeitsmediums ganz oder teilweise durch die Turbinenwärmetauscheranordnung geführt werden, falls das Druckverhältnis zwischen Verdichteranordnungseintritts - und Turbinenanordnungsaustrittsdruck kleiner als 10:1, insbesondere kleiner als 8:1 ist.

Weitere Merkmale und Vorteile ergeben sich aus den Unteransprüchen und den Ausführungsbeispielen. Hierzu zeigt, teilweise schematisiert:
Fig. 1: ein Flugtriebwerk nach einer Ausführung der vorliegenden Erfindung;
Fig. 2: ein Stufenkennfeld;
Fig. 3: einen spezifischen Kraftstoffverbrauch;
Fig. 4: ein Druckverhältnis;
Fig. 5
   (a) eine Stellung eines Bypassmittels BY,
   (b) Werte W45R
   (c) Werte Rbios
   (d) Werte für den Verdichter;

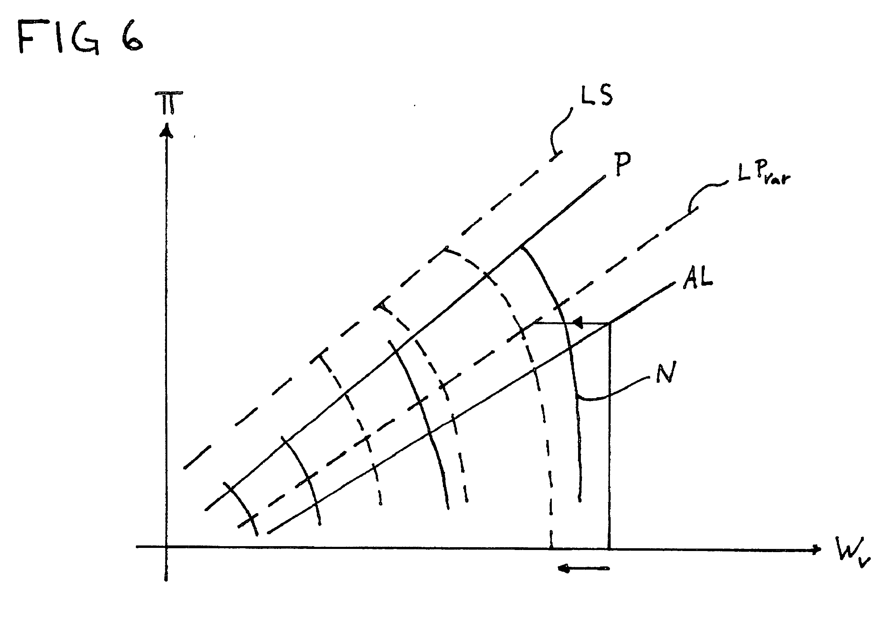

Fig. 6: ein Gesamt-Verdichterkennfeld ;

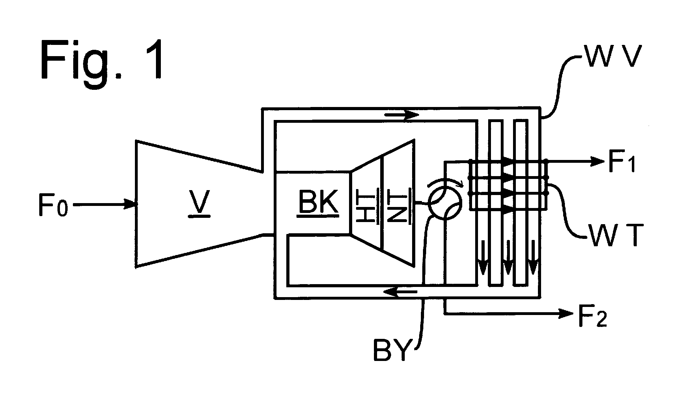

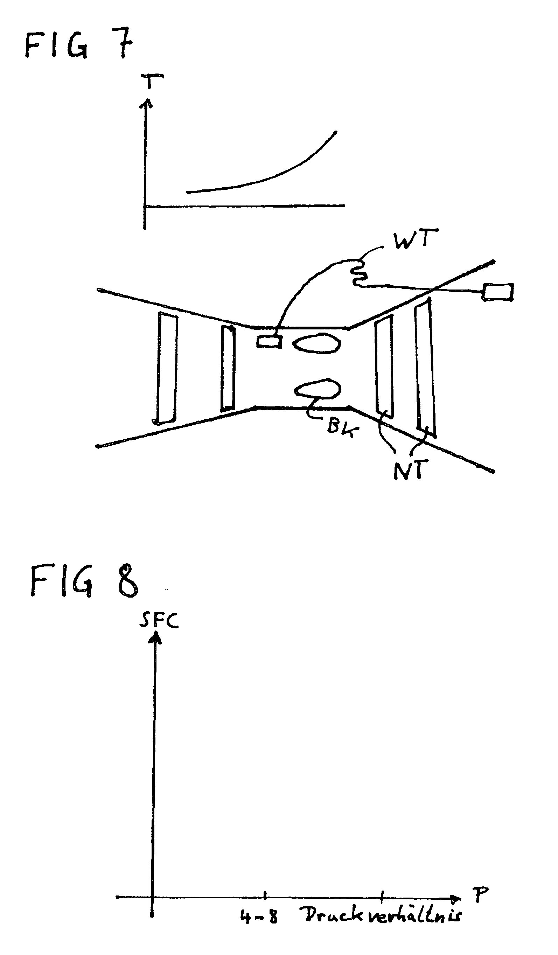

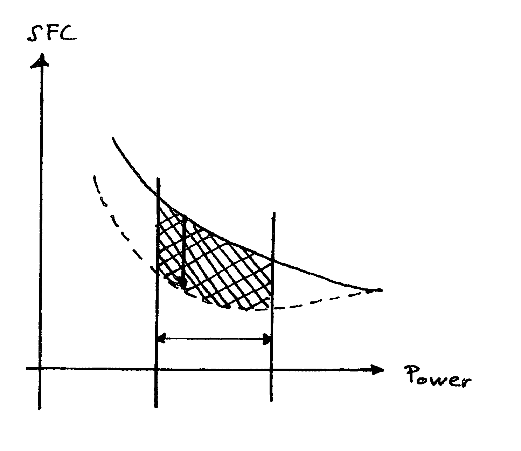

Fig. 7: einen Teil des Flugtriebwerks der Fig. 1; und
Fig. 8, 9: einen spezifischen Kraftstoffverbrauch.

Fig. 1 zeigt ein Flugtriebwerk nach einer Ausführung der vorliegenden Erfindung mit einem Verdichter V, einer diesem nachgeschalteten Brennkammer BK, einer dieser nachgeschalteten Hochdruckturbine bzw. -turbinenstufe HT und einer dieser nachgeschalteten Niederdruckturbine bzw. -turbinenstufe NT. Der Verdichter saugt einen Arbeitsmediumstrom F₀ ein.

Zwischen dem Verdichter und der Brennkammer ist ein Verdichterwärmetauscher WV angeordnet, der mit einem nach der Niederdruckturbine angeordneten Turbinenwärmetauscher WT kommuniziert.

Der Verdichterwärmetauscher WV ist als offener Wärmetauscher mit einer Wärmetauscherpassage ausgebildet, in die durch einen Einlass das gesamte Arbeitsmedium, das den Verdichter V verlässt, eintritt. Beim Durchströmen nimmt dieses Arbeitsmedium, im Ausführungsbeispiel exemplarisch im Kreuzstrom, Wärme vom Arbeitsmedium auf, das die Niederdruckturbine NT verlässt, und tritt anschließend aus einem Austritt in die Brennkammer BK ein. Exemplarisch sind drei parallele Rohrabschnitte der Wärmetauscherpassage WV und vier parallele Rohrabschnitte des Turbinenwärmetauschers WT angedeutet.

Ein variables Bypassmittel BY kann wahlweise eine Bypasspassage um den Turbinenwärmetauscher WT öffnen bzw. schließen und so einen Arbeitsmediumanteil F₂ an dem Turbinenwärmetauscher WT vorbeiführen, der von dem Arbeitsmediumanteil F₁ durchströmt wird. Eine Steuerung (nicht dargestellt) aktuiert das Bypassmittel derart, dass in wenigstens einem Betriebszustand, insbesondere in einem Volllastbetriebszustand, wenigstens 50% des Arbeitsmediums durch die Bypasspassage geführt wird, so dass die Turbinenanordnung HT, NT voll entspannen kann. Es ist auch möglich, insbesondere im Volllastbetrieb das gesamte Arbeitsmedium an dem Turbinenwärmetauscher WT vorbeizuführen (F₁ = 0).

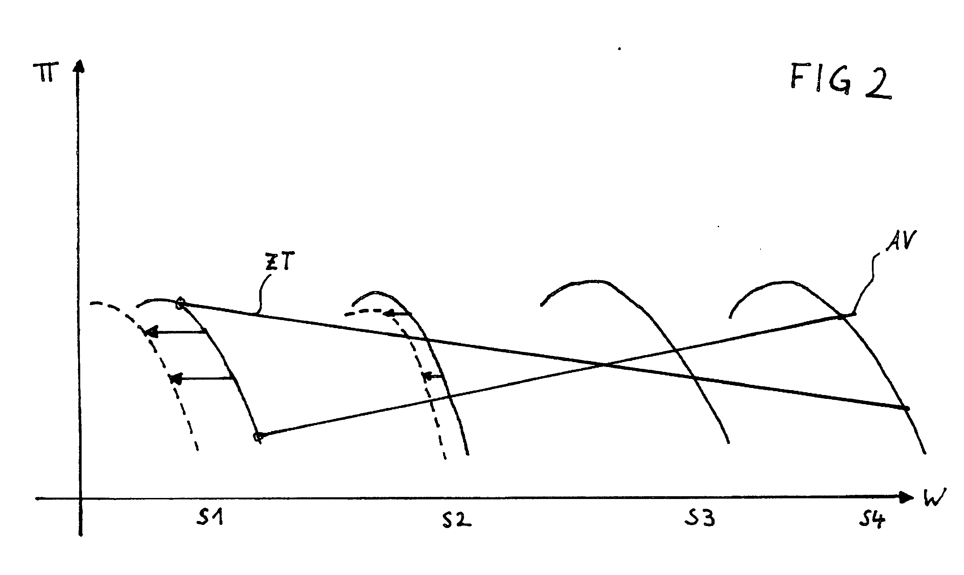

Wenigstens 50% aller Verdichterstufen des Verdichters V, beispielsweise die beiden Niederdruckstufen S1, S2 (vgl. Fig. 2) eines vierstufigen Verdichters, sind variabel bzw. verstellbar ausgebildet, beispielsweise mittels verstellbarer Leit- und/oder Laufschaufeln, verstellbaren Bypasspassagen oder dergleichen, die von der Steuerung aktuiert werden.

Fig. 2 zeigt ein Stufenkennfeld, in dem für die vier Stufen S1, S2, S3 und S4 des Verdichters V, insbesondere eines Kerntriebwerksverdichters, das Druckverhältnis Π über dem Durchsatz W dargestellt ist. Mit AV sind die Arbeitspunkte Volllast markiert, mit ZT Zielteillast. Weiter sind die Verstellungen im Niederdruckverdichter (Stufen S1, S2), insbesondere dessen Stator, strichliert angedeutet.

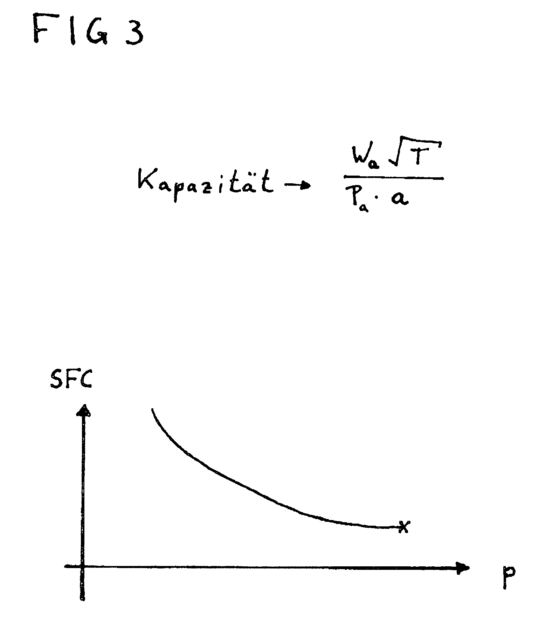

Fig. 3 zeigt, insbesondere für die Turbinenanordnung, den spezifischen Kraftstoffverbrauch ("Specific Fuel Consumption", SFC) über dem Druck P, wobei 0% (Auslegung auf Maximallast) durch ein Kreuz (x) markiert ist.

Die Kapazität ergibt sich aus der in Fig. 3 angegebenen Formel, wobei T die Temperatur, Pₐ den Druck, a den Querschnitt und W den Durchsatz bezeichnet.

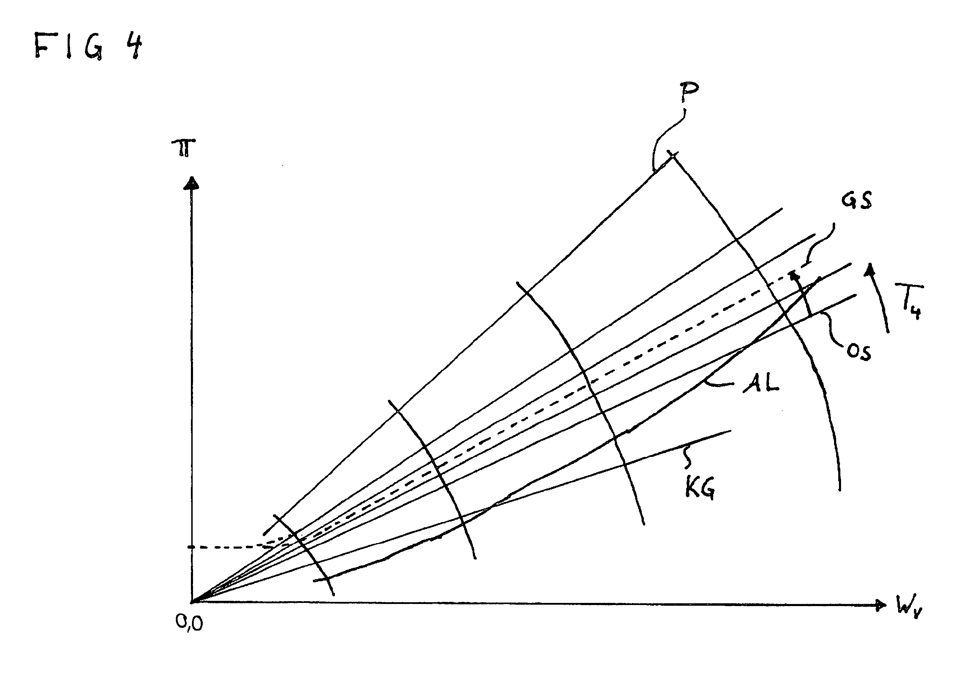

Fig. 4 zeigt das Druckverhältnis Π über dem Durchsatz Wᵥ, insbesondere für eine Hochdruckturbine bzw. -turbinenstufe mit variabler Kapazität. Eingezeichnet sind die Pumpgrenze P, eine offene Stellung OS, eine geschlossene Stellung GS, in der Leitschaufeln der Hochdruckturbine bzw. -turbinenstufe HT geschlossen bzw. zu sind, eine Arbeitslinie AL sowie Kühl'sche Geraden ("Throttling lines") KG. Durch einen Pfeil ist ein Temperaturanstieg der Brennkammeraustrittstemperatur T₄, angedeutet.

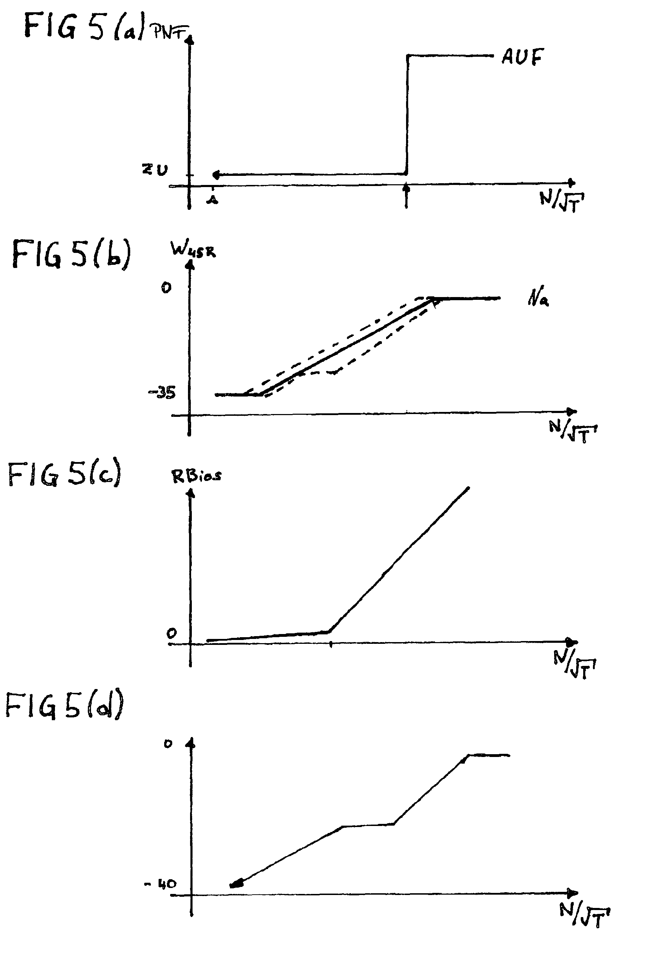

Fig. 5 zeigt (a) eine Stellung des Bypassmittels BY (vgl. Fig. 1), insbesondere eines Bypass-Stellventils, das wahlweise zwischen "ZU" und "AUF" verstellbar ist, (b) bzw. (c) die Werte W45R bzw. Rbios für die (Power)Turbine, sowie (d) für den Verdichter, jeweils über dem Drehzahlparameter N/√T, bei einem Betreiben des Flugtriebwerks nach einem Verfahren nach einer Ausführung der vorliegenden Erfindung.

Fig. 6 zeigt das Gesamt-Verdichterkennfeld mit dem Druckverhältnis Π über dem Durchsatz Wᵥ. Markiert sind Leitschaufeln LS der ersten Stufe des variablen Verdichters (strichliert), Pumpgrenze P, eine Arbeitslinie AL, Drehzahllinien N und variablem Niederdruck LPvar.

Fig. 7 zeigt vergrößert die Brennkammer BK, die variabel bzw. einstellbare Niederdruckturbine NT und einen Teil des Turbinenwärmetauschers WT, wobei die Temperatur(differenz) T in Fig. 7 über dem Flugtriebwerk angedeutet ist.

Fig. 8, 9 zeigen jeweils den spezifischen Kraftstoffverbrauch ("Specific Fuel Consumption", SFC) über dem Druck bzw. Druckverhältnis P, wobei durch vertikale Linien der Auslegungsbereich für einen Wärmetauscher markiert ist.

### Bezugszeichenliste

- F₀,F₁,F₂: Arbeitsmediumstrom
- V: Verdichter
- BK: Brennkammer
- HT: Hochdruckturbine/-turbinenstufe
- NT: Niederdruckturbine/-turbinenstufe
- BY: (variables) Bypassmittel
- WT: Turbinenwärmetauscher
- WV: Verdichterwärmetauscher
- ZT: Zieltteillast
- AV: Arbeitspunkt Volllast
- AL: Arbeitslinie
- OS: offene Stellung
- GS: geschlossene Stellung
- P,Pₐ: Druck(verhältnis)
- KG: Kühl'sche Geraden ("Throttling lines")
- T,T₄: Temperatur(differenz)
- N: Drehzahllinie
- LS: Leitschaufel
- LPᵥₐᵣ: variabler Niederdruck
- S1,S2,S3,S4: Niederdruckstufen
- W,Wᵥ: Durchsatz
- SFC: spezifischer Kraftstoffverbrauch ("Specific Fuel Consumption")
- a: Querschnitt

## Patentansprüche

1. Flugtriebwerk, insbesondere Hubschraubertriebwerk, mit einer ein- oder mehrstufigen Verdichteranordnung (V), einer dieser nachgeschalteten Brennkammer (BK), einer dieser nachgeschalteten ein- oder mehrstufigen Turbinenanordnung (HT, NT), einer Verdichterwärmetauscheranordnung (WV), einer Turbinenwärmetauscheranordnung (WT) und einem Bypassmittel zum wahlweisen Durch - oder Vorbeiführen von Arbeitsmedium an wenigstens einem Turbinenwärmetauscher (WT) der Turbinenwärmetauscheranordnung.

2. Flugtriebwerk nach Anspruch 1, **dadurch gekennzeichnet, dass** die Verdichter - und/oder Turbinenwärmetauscheranordnung auf einen Teillastbetrieb ausgelegt ist.

3. Flugtriebwerk nach einem der vorhergehenden Ansprüche, **dadurch gekennzeichnet, dass** ein oder mehrere Stufen, insbesondere wenigstens 30%, vorzugsweise wenigstens 50% aller Stufen der Verdichter- und/oder der Turbinenanordnung verstellbar ausgebildet sind, insbesondere verstellbar ausgebildete Leit - und/oder Laufschaufeln aufweisen.

4. Flugtriebwerk nach einem der vorhergehenden Ansprüche, **dadurch gekennzeichnet, dass** das Flugtriebwerk eine Hochdruckturbine bzw. -turbinenstufe mit variabler Kapazität aufweist.

5. Flugtriebwerk nach einem der vorhergehenden Ansprüche mit einer Steuerung, die zur Durchführung eines Verfahrens nach einem der nachfolgenden Ansprüche eingerichtet ist.

6. Verfahren zum Betreiben eines Flugtriebwerks nach einem der vorhergehenden Ansprüche, wobei in wenigstens einem Betriebszustand, insbesondere in einem Volllastbetriebszustand, wenigstens 30%, insbesondere wenigstens 50% des aus der Brennkammer austretenden Arbeitsmediums wenigstens teilweise an der Turbinenwärmetauscheranordnung vorbei geführt wird.

7. Verfahren nach Anspruch 6, **dadurch gekennzeichnet, dass** wenigstens 30%, insbesondere wenigstens 50% des Arbeitsmediums wenigstens teilweise an der Turbinenwärmetauscheranordnung vorbei geführt wird, falls das Druckverhältnis zwischen Verdichteranordnungseintritts- und Turbinenanordnungsaustrittsdruck größer als 10:1, insbesondere größer als 12:1 ist, und/oder dass wenigstens 30%, insbesondere wenigstens 50% des Arbeitsmediums wenigstens teilweise durch die Turbinenwärmetauscheranordnung geführt wird, falls das Druckverhältnis zwischen Verdichteranordnungseintritts- und Turbinenanordnungsaustrittsdruck kleiner als 10:1, insbesondere kleiner als 8:1 ist.
